(19) Europäisches Patentamt
European Patent Office
Office européen des brevets

(11) **EP 4 311 161 A1**

(12) **EUROPEAN PATENT APPLICATION**

(43) Date of publication:
**24.01.2024   Bulletin 2024/04**

(21) Application number: **22382685.0**

(22) Date of filing: **18.07.2022**

(51) International Patent Classification (IPC):
**H04L 9/08** (2006.01)          **H04L 9/30** (2006.01)
**H04L 9/32** (2006.01)

(52) Cooperative Patent Classification (CPC):
**H04L 9/3073; H04L 9/0825; H04L 9/083;**
**H04L 9/3215**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GMV Soluciones Globales Internet, S.A.U.**
**28760 Tres Cantos Madrid (ES)**

(72) Inventors:
• **León Cobos, Juan Jesús**
  **28760 Tres Cantos (ES)**
• **Celis de la Hoz, Pedro**
  **28760 Tres Cantos (ES)**

(74) Representative: **Elion IP, S.L.**
**Paseo Castellana, 150-4 dcha**
**28046 Madrid (ES)**

(54) **METHOD AND ENTITY FOR GENERATING A PRIVATE KEY IN AN IDENTITY-BASED CRYPTOSYSTEM WITHOUT KEY ESCROW**

(57)    The present disclosure relates to a computer-implemented method for generating a private key in an identity-based cryptosystem, the method comprising:
- defining a random invertible group homomorphism between a given algebraic group (C) and a homomorphic algebraic group (C'); wherein the random invertible group homomorphism may be inverted with the knowledge of a trapdoor;
- mapping one or more given group elements (P1... Pn) of the given algebraic group (C) by using the invertible group homomorphism to obtain one or more mapped elements (P1'...Pn') within the homomorphic algebraic group (C');
- obtaining a new element (PK') of the homomorphic algebraic group (C') from shares (PKi') of the new element of the homomorphic algebraic group; the shares of the new element of the homomorphic algebraic group being computed by using the one or more mapped elements (P1'... Pn'), a public key (ID) and shares (MKi) of a master key (MK) by applying a secure multi party computation scheme to carry out an identity-based private key generation algorithm; each share (MKi) of the master key (MK) being stored at an entity (KGNi); and
- mapping the new element (PK') of the homomorphic algebraic group (C') by using the trapdoor to obtain the inverse of the invertible group homomorphism to obtain a secret element (PK) of the given algebraic group (C), the secret element (PK) of the given algebraic group being a private key mathematically linked to the public key (ID).

**FIG. 1**

Processed by Luminess, 75001 PARIS (FR)

**Description**

The present disclosure is encompassed within the field of cryptographic communications, and more particularly, within the field of identity-based cryptosystems.

**BACKGROUND**

Public key cryptography is a well-known technology that refers to methods to encrypt messages and verify digital signatures using a public key. A public key is a key that may be publicly disclosed without jeopardizing the security of the encryption and signature methods. Public key cryptography solves some key management problems associated to symmetric key cryptosystems, as symmetric keys must always be kept secret.

In public key cryptography each public key is mathematically linked to a private key in such a way that it is impossible or computationally infeasible to recover the private key from knowledge of the public key. Each pair of public and private key corresponds to an entity, which will be referred to as the principal (for instance a physical person or a device owned by a physical person), who is in possession of the private key. While the public key may be used by anyone for encrypting messages and verifying digital signatures, the private key is used by the principal for decrypting messages and creating digital signatures.

Besides the unfeasibility of deriving the private key from the public key, the security of public key cryptosystems essentially relies on two further conditions.

The first condition is that the private key is not known by anyone other than the legitimate principal. While this condition may be relaxed in some scenarios such as a corporate context (where corporations might require access to employees' private keys created for some corporate tasks), it remains an important condition in general, as it ensures that nobody can impersonate the legitimate principal.

The second condition is a bit more subtle, and involves building the confidence that the public key used for encrypting messages and verifying signatures indeed corresponds to the intended receiver of the encrypted message (or the signatory of the signed message). In essence, before a public key is used it must be ensured that the public key is indeed mathematically linked with the private key of the intended principal and not to a different private key.

In order to make practical sense of this second condition, it is typically assumed that the principal is associated to some identity in the community where the cryptosystem is to be used. In this context, an identity is some information (usually a string of characters) that other members of the community can recognize and identify with the principal. Thus, the second condition can be more simply stated as ensuring that the correspondence between and identity and a public key is genuine.

The current state-of-the-art in public key cryptosystems includes three types of schemes, which differ to one another as to how they ensure those two conditions are properly considered.

In a first scheme, the most popular and known one, the principal randomly generates the pair of public and private keys using some secure mechanism that ensures that the private key is stored in a secure device, and further ensures that the secure device always remains under control of the principal. Once a principal has generated a pair of keys, it contacts a trusted party and provides this trusted party with the public key according to some pre-established procedure, so that the trusted party is satisfactorily convinced that the public key was indeed provided by that principal. The trusted party then creates a so-called digital certificate than includes both the identity of the principal and the public key. This certificate is public and the principal can send it to any third party. The third party will use the certificate to obtain the public key of that principal and, if the third party indeed trusts the trusted party, will gain the confidence that the identity of the principal and the public key indeed correspond to each other. In these schemes the trusted party is usually known as a Certificate Authority (CA). Key and certificate management is dealt with by means of so-called Public Key Infrastructures (PKIs), which are quite complex ecosystems comprising hardware, software, people, policies and procedures designed to ensure proper and secure key management, including certificates issue, expiration and revocation.

In a second scheme, which is quite recent, the legitimate principal likewise creates a pair of public and private keys, and stores the private key in a secure device always to remain under control of the principal. However, contrary to the first scheme, no certificates are used to ensure the second condition. Instead, the principal stores a tuple comprising its identity and the public key in some publicly available ledger that can be consulted by anyone at any time. Access to the ledger is granted by some authority that somehow ensures the correspondence between identity and public key is legitimate. Then the ledger may be consulted by anyone intending to use the public key.

For this scheme to be secure, it is of the essence that the ledger includes some mechanism to ensure its integrity, meaning that once the tuple is stored in the ledger, the tuple cannot be modified. This integrity is usually referred to as the immutability of the ledger. The trust on the correspondence between and identity and a public key is then gained from the trust on the immutability of the ledger. This scheme is being currently proposed for so-called Self-Sovereign Identity (SSI) scenarios, where the use of PKIs may not be favored for any number of reasons. The ledger is usually deployed in the cloud using blockchain technology, which exists in different flavors depending on how access to the ledger is managed and how the integrity of the ledger is ensured. While certificates are no longer necessary, governance of the ledger may arguably involve the same complexity as the governance of a PKI. Actually, the general way to ensure the integrity of a ledger and the integrity of a digital certificate is the same, i.e. the use of digital signatures. Thus, the ledger is very similar to a publicly available repository of certificates.

In a third scheme, the paradigm of the principal randomly generating a pair of public and private keys is abandoned. Instead, the principal contacts an entity called a Private Key Generator (PKG) and convinces the PKG of its identity. Then the PKG generates a private key mathematically linked to the identity, and possibly some other additional information, and gives that private key to the principal for secure storage in the principal's secure device. In such a scheme, what makes the PKG capable of generating any private key corresponding to any identity is the existence of a so-called Master Key (MK), which is in the PKG sole possession. The security of these schemes relies on the fact that the MK is kept secret, together with the fact that it is computationally infeasible to generate a private key for an identity without knowing the MK. These schemes are known as Identity-based schemes for historical reasons, although it must be kept in mind that the private key may be generated by using not only the identity but also additional data. The advantages of an identity-based scheme are that, while a principal decrypts messages or create signatures using its private key, as usual, when a third party wants to encrypt a message for the principal, the third party can do so just using the principal's identity. Signatures can also be verified using just the principal's identity. Therefore, no custom created public keys are necessary in the scheme.

The best way to characterize Identity-based schemes is to consider them public key schemes with the peculiarity that the identity itself is the public key, or in other words that the public key, instead of being randomly generated, may be purposefully selected to comprise the identity of the principal. Thus, this third scheme consists in using any piece of information as a public key and deriving a private key from it. The fact that the public key comprises the identity completely removes the need for the second condition (which involved the need to ensure that public key and identity correspond to each other), thus making certificates or immutable ledgers superfluous.

This third scheme was originally suggested by Adi Shamir in the 80's, but no practical ways to actually build such schemes were known until Dan Boneh and Matthew K. Franklin designed the first such scheme in 2001 using a novel technology known as pairing-based cryptography, thus giving birth to what is known today as Identity Based Cryptography (IBC).

While the fact that certificates or ledgers are no longer necessary makes IBC quite attractive, IBC also has a deep issue, which is the difficulty to properly satisfy the first condition. Recall the first condition was to ensure that only the principal knows the private key. The issue is obvious since the private key is elsewhere generated and then given to the principal. This is known as the key escrow problem, and it is a problem because of the great amount of trust that must be placed in the PKG, as the PKG can create any private key if so wishes. Although in some scenarios IBC can still be used confidently, in general the potential consequences that the PKG is compromised or otherwise becomes malicious are far too important to be disregarded. For this reason, the key escrow problem has so far slowed down the adoption of IBC.

The key escrow problem is actually the combination of three distinct issues, which are related but different. The first issue is how to keep the Master Key secret. This may be dealt with by the use of Hardware Security Modules (HSMs). As HSM production is quite a mature technology, this issue can be efficiently managed within the current state-of-the-art.

The second issue is how to control the creation of private keys. A possible way to deal with this second issue is to distribute the MK between several different entities. Each part of the MK that is distributed is called a share, and the entities holding those shares are referred to as shareholding entities. The technology actually exists (at least for some IBC primitives) to compute a private key using shares of the MK without requiring that any shareholding entity actually discloses its share. This technology is called Secure Multi Party Computation (SMPC), and when applied to the computation of a private key, it might be able to considerably reduce the risk associated with the second issue, as the illegitimate creation of a private key would require the collusion of several (if not all) of the shareholding entities that have a share of the MK. Therefore, although the generation of private keys using SMPC still faces some challenges depending on the IBC key generation primitive, the second issue is at least conceptually solvable.

The third and last issue is how to make sure that whenever a private key is generated and provided to the principal, the private key is properly protected so that no one can access or capture that private key and misuse it to impersonate the principal.

Unfortunately, the current state-of-the-art in IBC does not include a practical and convenient way to deal with this third issue. The only known way would consist in making the principal itself a party within the SMPC process. This involves having the principal's secure device communicate directly and securely with the shareholding entities. From a practical perspective, this situation can be considered similar to setting up a VPN between the secure device and all the shareholding entities and having them all together compute the principal's private key in a collaborative way.

While this situation is possible in theory, it is very inconvenient in practice. Apart from performance concerns, such a setting would require that the shareholding entities be directly accessible from the outside by any principal's secure device. But these secure devices are, form the perspective of the shareholding entities, untrusted devices. Years of experience have shown that such direct communication is very risky from a security perspective. Instead, and according to a defense-in-depth approach, access from the device to the very security-critical shareholding entities should be established via a segmented network through at least one proxy entity (possibly more than one). In order to prevent direct communication, such proxy should act as one end of the VPN connecting to the secure device and establish different secure independent connections with each shareholding entity. All secure Internet architectures are designed that way, sometimes with more than one proxy level (typically a DMZ level behind a line of firewalls and then an internal network segment behind a second line of firewalls) to prevent any risk that the internal subnetwork where shareholding entities are located is directly reachable form the outside.

The problem with using an intermediate proxy entity is that this entity will necessarily gain knowledge of the private key in the process of providing it to the principal's secure device. As the private key may be captured at that point, the intermediate entity in question is an interesting target for attacks and, in essence, becomes a critical point of failure from a security perspective. Moreover, the organization that controls this intermediate entity finds itself in a privileged position, and contrary to shareholding entities that need to collude to misuse the MK, the intermediate entity may become malicious without the need to collude with any other entity.

Because of these reasons, there is currently no good practical solution to the key escrow problem in Identity-based cryptosystems.

## SUMMARY

The present disclosure relates to a method for securely generating a private key within an identity-based cryptosystem in a way that the risks associated with the key escrow problem are largely mitigated.

An identity-based cryptosystem is a scheme comprising a set of algorithms including a setup algorithm and a private key generation algorithm.

A typical setup algorithm within an identity-based cryptosystem defines a given algebraic group, one or more elements of the given algebraic group, a master key which is typically a long integer and some additional information such as hash functions to be used. While the master key is kept secret, the rest of the information is made public.

A typical private key generation algorithm takes as input: a public key plus some public information defined in the setup algorithm, including any or all of the one or more elements of the given algebraic group. The public key is a piece of digital information that comprises an identity and/or any other information from which the private key will be generated. The private key generation algorithm outputs: a private key which is an element of the given algebraic group defined in the setup algorithm.

Secure Multi Party Computation refers to cryptographic protocols that allow for the distributed computation of a function or algorithm over distributed inputs without revealing additional information about the inputs.

A first aspect of the disclosure relates to a computer-implemented method for generating a private key in an identity-based cryptosystem, the method comprising:

- defining a random invertible group homomorphism between a given algebraic group and a homomorphic algebraic group; wherein the random invertible group homomorphism may be inverted with the knowledge of a trapdoor;
- mapping one or more given group elements of the given algebraic group by using the invertible group homomorphism to obtain one or more mapped elements within the homomorphic algebraic group;
- obtaining a new element of the homomorphic algebraic group from shares of the new element of the homomorphic algebraic group; the shares of the new element of the homomorphic algebraic group being computed by using the one or more mapped elements, a public key and shares of a master key by applying a secure multi party computation scheme to carry out an identity-based private key generation algorithm; each share of the master key being stored at an entity; and
- mapping the new element of the homomorphic algebraic group by using the trapdoor to obtain the inverse of the invertible group homomorphism to obtain a secret element of the given algebraic group, the secret element of the given algebraic group being a private key mathematically linked to the public key.

In this method, an invertible homomorphism from the given algebraic group to a new random algebraic group is randomly generated. Thus, the new random algebraic group is homomorphic to the given algebraic group. The invertible homomorphism may be used to map any element of the given group to a mapped element in the homomorphic group and, vice versa, to map any element of the homomorphic group back to its corresponding element in the given group. In order to do these mappings, knowledge of the random way in which the homomorphism has been generated is required. Therefore, this knowledge acts as a trapdoor, in the sense that only with that knowledge may either mapping be computed.

According to the aforementioned method, a new element of the homomorphic algebraic group is generated as instructed in the private key generation algorithm, wherein instead of using any or all of the one or more elements of the given algebraic group, mapped elements of the homomorphic algebraic group are used as substitutes, each mapped element being obtained by mapping an element of the given algebraic group using the homomorphism. The fact that the elements used in the present method for generating a private key belong to the homomorphic algebraic group results in the output of the algorithm being a new element which itself belongs to the homomorphic algebraic group.

According to this method the private key is obtained by using the trapdoor to map the new element of the homomorphic algebraic group back to the given group, thus obtaining a secret element of the given algebraic group which due to the properties of homomorphisms is the private key. For this reason, the new element of the homomorphic algebraic group may be referred to as the auxiliary private key. Because of the way the homomorphism was generated, the mapping back from the auxiliary private key to obtain the private key may only be performed with the knowledge of the trapdoor, thus the fact that the obtained private key may be kept secret.

According to the aforementioned method, the private key generation algorithm which outputs the auxiliary private key is carried out in a distributed way using a Secure Multi Party Computation protocol. For this purpose the shares of the master key are distributed among two or more entities (also referred to as participants or nodes), so that each node stores a share of the master key. This sharing can be done following a secret sharing scheme, which is a cryptographic scheme that makes it possible to share a secret among two or more entities in such a way that only a well-defined combination of entities can use or otherwise recover the secret. The fact that the master key is distributed greatly reduces the risk of misuse of the master key, as misuse would require several nodes to maliciously collude.

According to the aforementioned method the secure multi party computation protocol results in each node computing a share of the new element of the homomorphic algebraic group - i.e. a share of the auxiliary private key. The auxiliary private key may then be arithmetically computed using its shares.

In certain embodiments, the step of obtaining a new element of the homomorphic algebraic group (that is, the auxiliary private key) from shares of the auxiliary private key comprises that the entity wishing to generate the private key -such as a mobile device-connects with an intermediate entity, which in turn connects to the two or more nodes. This way, the entity wishing to generate the private key is neither required nor allowed to directly connect to the nodes, thus increasing security from a network security perspective and reducing the risk of a compromise of the nodes. Additionally, the entity wishing to generate the private key can be spared of computation capabilities, since the intermediate entity assumes the computing and communication burden with the two or more nodes storing the shares of the master key. Moreover, the auxiliary private key may then be computed from the shares of the auxiliary private key by the intermediate entity. Further, the intermediate entity may act as a coordinator among the nodes in the realization of the Secure Multi Party Computation. For all these reasons the presence of the intermediate entity is advantageous when carrying out the aforementioned method.

In certain embodiments, the given algebraic curve and the homomorphic algebraic group are cyclic groups of points defined over elliptic or hyper elliptic curves and the invertible group homomorphism is an isogeny, typically an isogeny of large degree, preferably generated by random composition of low degree isogenies. The given algebraic group is thus a group of points in a curve, which is known as the domain of the isogeny, and the homomorphic algebraic group is a group of points in another curve, known as the codomain of the isogeny.

The fact that the isogeny -typically of large degree- is generated from composition of low degree isogenies - such as degree two or degree three isogenies - makes the mapping of points from the domain to the codomain more efficiently computable, and besides it makes it feasible to compute the inverse of the isogeny by composition of the dual isogenies of the low degree isogenies.

In some embodiments of the present disclosure the given curve is a supersingular elliptic curve and an efficiently computable bilinear pairing exists between points of the given curve. The existence of such bilinear pairing is used to construct the identity-based cryptography algorithms. The fact that the curve is supersingular is convenient for the random generation of the isogeny, because of the indistinguishability features associated to a random walk in supersingular isogeny graphs.

According to certain embodiments, the method for generating a private key in an identity-based cryptosystem is carried out by a mobile device, preferably a mobile device comprising a SIM module, such as a mobile phone. Advantageously, the public key - typically, the identity, ID- may comprise a telephone number and a timestamp. Using the telephone number as part of the public key enables the method for generating a private key to be used with mobile phones. Further, using a timestamp allows having several private keys generated with the present method for a same mobile phone, each private key being generated at a different time.

In certain embodiments, the method for generating for generating a private key in an identity-based cryptosystem further comprises receiving a token construed from a plurality of tokens generated by each entity storing a share of the master key. This step is typically implemented by means of an SMS gateway, connected to the entity carrying out the method and to each entity storing a share of a master key. This enables using the method in entities -such as mobile phones- which are previously not in possession of a master key or wherein the private key is requested and/or generated for the first time.

An entity for generating a private key in an identity-based cryptosystem according to the present disclosure comprises a processor, which is configured for generating a private key in an identity-based cryptosystem according to method as defined in the foregoing.

A further aspect of the present disclosure relates to an entity for generating a private key in an identity-based cryptosystem, the entity comprises a processor, which processor is configured for:

- defining a random invertible group homomorphism between a given algebraic group and a homomorphic algebraic group; wherein the random invertible group homomorphism may be inverted with the knowledge of a trapdoor;
- mapping one or more given group elements of the given algebraic group by using the invertible group homomorphism to obtain one or more mapped elements within the homomorphic algebraic group;
- obtaining a new element of the homomorphic algebraic group from shares of the new element of the homomorphic algebraic group; the shares of the new element of the homomorphic algebraic group being computed by using the one or more mapped elements, a public key and shares of a master key by applying a secure multi party computation scheme to carry out an identity-based private key generation algorithm; each share of the master key being stored at an entity; and
- mapping the new element of the homomorphic algebraic group by using the trapdoor to obtain the inverse of the invertible group homomorphism to obtain a secret element of the given algebraic group, the secret element of the given algebraic group being a private key mathematically linked to the public key.

In certain embodiments the entity is a mobile device, such as a smartphone or similar mobile device having a SIM module or means for simulating a SIM module.

In certain embodiments, the entity comprises means for receiving a token from an SMS gateway, the token being construed from a plurality of tokens generated by each entity storing a share of the master secret.

The method and entity proposed are suitable for encrypting or signing electronic communications.

The different aspects and embodiments defined in the foregoing may be combined with one another, as long as they are compatible with each other.

Additional advantages and features of the present disclosure will become apparent from the detail description that follows and will be particularly pointed out in the appended claims.

## BRIEF DESCRIPTION OF THE DRAWINGS

To complete the description and in order to provide for a better understanding of the present disclosure, a set of drawings is provided. Said drawings form an integral part of the description and illustrate one or more embodiments, which should not be interpreted as restricting the scope of the disclosure, but just as an example of how the present disclosure can be carried out. The drawings comprise the following figures:

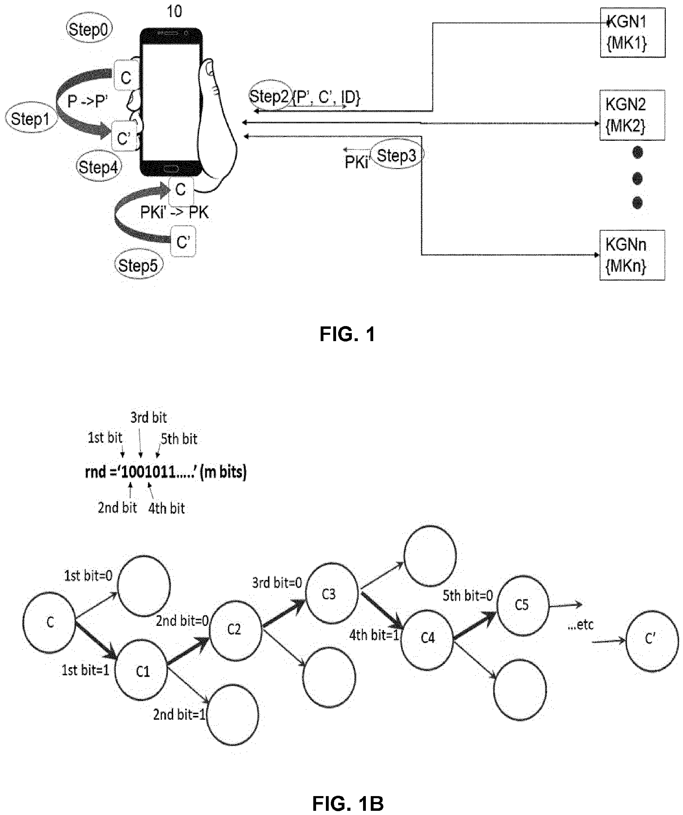

Figure 1 diagrammatically shows a method for generating a private key according to the present disclosure.

Figure 1B diagrammatically shows how a random large degree isogeny may be generated by walking a random path selecting at each step a random degree-2 isogeny, depending on the value of a bit in a randomly generated value rnd of size m bits, and composing such degree-2 isogenies to obtain a degree-$2^m$ isogeny.

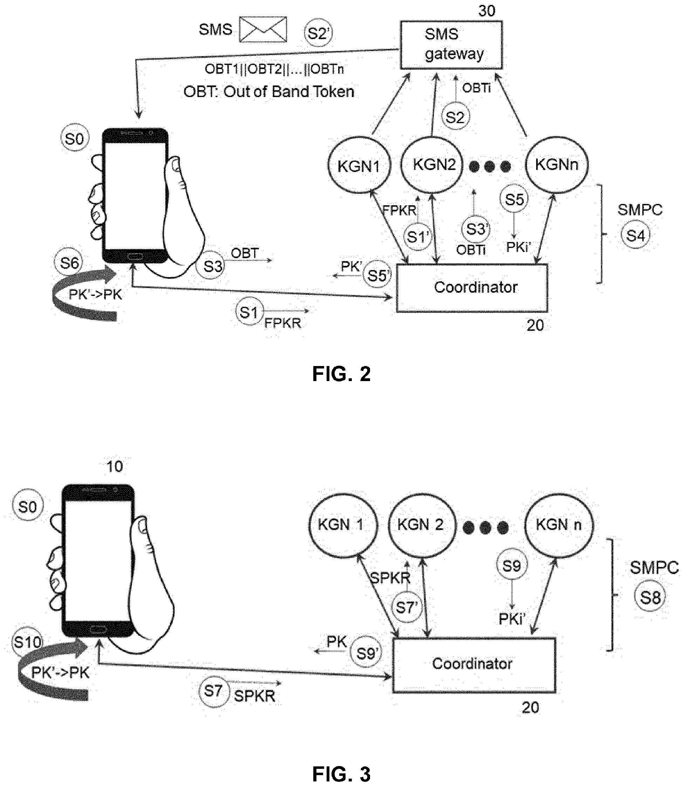

Figures 2 and 3 diagrammatically show a method for generating a private key according to the present disclosure, wherein a coordinator entity is used. In Figure 2, the private key is requested and generated for the first time. Figure 3 represents the case of further subsequent requests of the Private Key.

## DESCRIPTION OF SOME EMBODIMENTS

The following description is not to be taken in a limiting sense but is given solely for the purpose of describing the broad principles of the present disclosure. Embodiments thereof will be described by way of example, with reference to the above-mentioned drawings.

In a possible implementation, an identity-based cryptosystem may be based on the Sakai-Kasahara scheme, therefore employing the following Setup and Private Key Generation algorithms:

Setup algorithm:

The following parameters are defined and made publicly available:

- A pairing-friendly, supersingular elliptic curve C defined over some finite field F of large prime characteristic q, with pairing function e().
- A Generator point P of large prime order r, which generates some cyclic subgroup G of points in curve C.
- A hash function hash(), which takes as input any string of characters and outputs a long integer between 1 and r.

The following is defined and kept secret by each node i, referred to as Key Generation Node KGNi, being n the total number of nodes:

- A share of the master key MKi, which is randomly generated by each node, the share being a long integer between 1 and r.

The master key MK is then defined as:

$$MK = \sum_{i=1}^{n} MKi$$

The master key itself is not stored anywhere.

Finally, each node computes the value:

$$MKPi = MKi \cdot P$$

wherein . P refers to scalar multiplication with point P, and make the point MKP publicly available, being

$$MKP = \sum_{i=1}^{n} MKPi = MK \cdot P$$

Private Key Generation algorithm:

Upon input of a string ID (which acts as a public key), the private key is generated using the following computation:

$$PK = \frac{1}{MK + hash(ID)} \cdot P$$

where

$\dfrac{1}{MK + hash(ID)}$ refers to the modular multiplicative inverse modulo r of the sum *MK + hash(ID)*.

This method for securely generating a private key is carried out as explained in detail in the following. Figure 1 schematically shows a possible implementation of the method for generating a private key.

In the possible implementation shown in Figure 1, a user (whose hand is shown in Fig. 1) is in possession of a mobile device, which in the example shown is a smartphone 10. An APP or another similar software program for executing the method disclosed has been downloaded or stored in the smartphone 10. It is assumed that the Setup algorithm has been carried out, that the publicly available parameters are in possession of the smartphone 10 or downloaded via de APP, and that each node KGNi already has their share MKi. Else, the Setup algorithm should be executed, and the publicly available parameters are made available to the smartphone 10 and each node KGNi is provided with, or randomly generates, its share MKi of the master secret.

As part of an initial step (Step0), the smartphone 10 generates a random number rnd of m bits, m being a large number (the size of r). Then, starting from curve C, the smartphone proceeds to generate in subsequent sub-steps m low degree isogenies, which in this example are degree-2 isogenies. This is schematically represented in Figure 1B. At each sub-step there are three possible degree-2 isogenies, from which the one that maps to a curve that is isomorphic to the previous one (i.e. it has the same value of the j-invariant) is discarded, thus resulting in two possible curves as potential codomains for that sub-step. One of these two degree-2 isogenies is then selected at each sub-step on the value of the corresponding bit in rnd. Also, the isogeny that is dual to the selected degree-2 isogeny is calculated at each sub-step. Storing the definition of the dual isogeny at each sub-step makes it possible to compute the inverse of the large degree isogeny by composition of the dual isogenies, resulting in the large degree isogeny being invertible. After m sub-steps curve Cm is generated, which corresponds to the homomorphic algebraic group, that is C'=Cm.

In this example each degree-2 isogeny is defined at each sub-step by a rational map that maps the x-coordinate from the point in the domain to the x-coordinate of the point in the codomain, the map being of the form:

$$x \to \alpha x + \frac{\beta}{x + \gamma}$$

wherein the values of $\alpha, \beta, \gamma$ are members of the field F which are calculated using the well-known Velu's formula. The large degree isogeny is then defined by composition of the maps of all degree-2 isogenies, resulting in an isogeny of degree $2^m$. In this example the randomly generated value rnd is kept secret stored in the smartphone 10 and serves as a trapdoor, since only with the knowledge of the value rnd it is possible at each sub-step to know which one of the two available isogenies is to be selected.

In a next step (Step1) the smartphone calculates the map of point P using the large degree isogeny, resulting in a mapped point P' in curve C'.

The smartphone 10 next provides (Step2) the following data to each node KGNi: Curve C', point P', and identity ID. In the present example the identity, ID, is a phone number concatenated with a date. The phone number can be associated to the user of the smartphone 10, and the date can be the date of issue of the last private key PK. For instance:

- First time: ID='0034918061600|00000000'. There is no date of issue since a private key, PK, has not been issued yet.
- Subsequent time: ID='0034918061600|20220623'. 23 June 2022 is the date when the last private key, PK, was issued for that phone number.

Upon reception of data C',P',ID, all nodes KGNi engage in a Secure Multi Party Computation protocol that uses these data together with the value of the share MKi stored at each node. The protocol results in each node computing a point PKi' in curve C', each point PKi' being a share of an auxiliary private key PK'. Then each node KGNi provides (Step3) to the smartphone 10 their share PKi', of the auxiliary private key, PK'. In this example the smartphone 10 then computes the auxiliary private key PK' as follows (Step4):

$$PK' = \sum_{i=1}^{n} PKi'$$

The mobile device 10 finally generates the private key PK from the auxiliary private key PK' using the trapdoor which allows computation of the inverse of the large degree isogeny (Step5).

This method for generating a private key PK can be carried out without any information of the master secret MK or the private key PK being leaked, thus overcoming the problems of existing methods.

Details on exactly how the Secure Multi Party Computation protocol is performed so that each node computes point PKi' are provided in the following example.

Figure 2 shows another possible implementation of the method of the disclosure. In this example, a coordinator entity 20 is connected to and in communication with the smartphone 10 and the key generation nodes, KGNi. The smartphone 10 establishes a VPN (Virtual Private Network) connection to the coordinator entity 20, which is deployed in a secure infrastructure and has itself a secure connection to each of the nodes KGNi via different VPN. The fact that the VPNs are different implies that it is not possible for the smartphone to connect to the nodes KGNi.

As in the previous case, in a setup step (step S0) the smartphone generates a random number rnd and uses this random number to generate a random isogeny of large degree (random invertible group homomorphism) between a first curve C and a second curve C', the second curve C' being isogenous (homomorphic) to the first curve C, according to Figure 1B. Similarly, value P' is computed using the large degree isogeny. In this example, due to the specific private key generation algorithm selected, only one point P is mapped, resulting in point P'.

Since it is the first time that a private key PK is requested, and there is no private key stored in the smartphone, the smartphone 10 connects with the coordinator entity 20 and sends a First Private Key Request, FPKR (step S1). The First Private Key Request, FPKR, comprises the following FPKR data: the identity ID (including a phone number and a date), the mapped point P' and the second curve C'. In turn, the coordinator entity 20 forwards the FPKR data to each key generation node KGNi (step S1').

In this first request, each key generation node, KGNi, realizes that the FPKR data are not signed and generates a random Out of Band Token OBTi (each token OBTi is an integer). Each key generation node KGNi sends its random token, OBTi, together with the phone number to an SMS gateway 30 (step S2). The SMS gateway 30 compiles all tokens, OBTi, and concatenates them and sends the resulting Out-of-Band Token OBT in an SMS message to the phone number indicated by the key generation nodes KGNi (step S2').

In this example, when the smartphone receives the OBT it sends it to the coordinator entity (step S3), which in turn sends each OBTi to each corresponding node (step S3'). When each node receives the OBTi that it randomly generated, it becomes convinced that the request for a private key has actually originated from the phone number where the OBTi was sent to via de SMS gateway 30.

Once all nodes are convinced, they start a Secure Multi Party Computation (SMPC) protocol (step S4) so that each node ends up with a share PKi' of the auxiliary key PK. In this example the calculation is performed in seven substeps S4.a to S4.f, as follows:

- S4.a: Each node KGNi collaborates with the other nodes to generate a Beaver triplet BVi. A Beaver triplet is defined as a triplet of integers:

$$BVi = \{a_i, b_i, c_i\}$$

SUCH that

$$\left(\sum_{i=1}^{n} a_i\right)\left(\sum_{i=1}^{n} b_i\right) = \left(\sum_{i=1}^{n} c_i\right) \bmod r$$

The generation of a Beaver triplet involves for each node KGNi to randomly generate integer values $a_i$, $b_i$ and then having each node compute its value $c_i$, in collaboration with the other nodes and the coordinator. In this example this is done using fully homomorphic encryption with one multiplication as defined in the SMPC protocol known as SPDZ.

- S4.b: Next each node randomly generates an integer value $u_i$, computes the values ($u_i$ - $a_i$) and (*MKi* - *b_i*) and passes these two values to the coordinator entity. Since the value bi has been randomly generated does not gain knowledge of the values MKi.

- S4.c: Next the coordinator entity computes the integer values

$$\lambda = \sum_{i=1}^{n} (u_i - a_i) \bmod r$$

$$\mu = \sum_{i=1}^{n} (MKi - b_i) \bmod r$$

and passes the values $\lambda$, $\mu$ to all nodes.

- S4.d: Next each node computes the value $v_i$ defined as follows:

$$v_i = c_i + \mu a_i + \lambda b_i + \lambda \mu + u_i \big(hash(ID)\big) \bmod r$$

and provides this value to the coordinator entity. For this calculation the value of ID is defined as the concatenation of the phone number and the current date (which is the date of issue of the private key that is being computed), as defined in the foregoing.

- S4.e: Next the coordinator entity computes the value v as the sum of all values $v_i$ which due to the way it has been calculated it happens to be

$$v = \sum_{i=1}^{n} v_i = \left(\sum_{i=1}^{n} u_i\right)\left(\sum_{i=1}^{n} MKi + hash(ID)\right) = u\big(MK + hash(ID)\big) \bmod r$$

Where we have denoted

$$u = \sum_{i=1}^{n} u_i$$

Since u is a randomly generated value (as it is the sum of all randomly generated $u_i$) the value v completely hides the value *MK + hash(ID)* and therefore the value of MK from the coordinator entity

- S4.f: Next the coordinator computes the value w as the multiplicative inverse of v modulo r and provides w to all nodes.
- S4.g: Finally each nodes computes the value PKi' as:

$$PKi' = (wu_i) \cdot P' = \left(\frac{u_i}{u\big(MK + hash(ID)\big)}\right) \cdot P'$$

Once each value PKi' has been calculated by each node, in step S5 all nodes provide the value PKi' to the coordinator entity. The coordinator entity then computes:

$$PK' = \sum_{i=1}^{n} PKi' = \frac{\sum_{i=1}^{n} u_i}{u\big(MK + hash(ID)\big)} \cdot P' = \frac{1}{MK + hash(ID)} \cdot P'$$

and provides the value PK' to the smartphone (step S5').

The mobile device 10 finally generates the private key PK from the auxiliary private key PK' using the inverse of the large degree isogeny (step S6) and verifies that the Private Key PK is correct using the pairing function e() for verifying the correctness of the identity ID:

$$e\big(PK, MKP + \big(hash(ID)\big)P\big) = e(P, P)$$

and accepts the value PK if the identity holds, otherwise rejecting it.

Figure 3 shows another method for generating a new private key PK, when a private key already exists in the smartphone 10, and for example, the smartphone 10 wishes to have their private key PK renewed. Then, the setup step (S0) is executed, and the smartphone 10 sends a Signed Private Key Request, SPKR (step S7) to the coordinator node 10. The Signed Private Key Request, SPKR, comprises the following SPKR data: the mapped point P', the curve C' and the identity ID, which are signed with the current private key PK. The coordinator node 10 in turn sends the SPKR data to each key generation node KGNi (step S7').

Each key generation node KGNi verifies that the signature of the received SPKR data is valid using the ID, and upon verification proceeds, with the support of the coordinator entity 20, to compute a share PKi', of the auxiliary private key, PK', performing secure multiparty computation (step S8). Each share PKi is sent to the coordinator node 20 (step S9). Using these shares PKi the coordinator node 20 computes the auxiliary private key PK' and sends it to the smartphone (step S9'). The mobile device 10 finally generates the private key PK from the auxiliary private key PK' using the inverse of the large degree isogeny (step S10) and, upon verification that the private key PK is correct, replaces their current private key PK with the newly calculated private key PK. Steps S8, S9, S9' and S10 in Figure 3 are respectively equivalent to steps S4, S5, S5' and S6 in Figure 2.

The present disclosure is obviously not limited to the specific embodiment(s) described herein, but also encompasses any variations that may be considered by any person skilled in the art (for example, as regards the choice of materials, dimensions, components, configuration, etc.), within the general scope of the disclosure as defined in the claims.

**Claims**

1. A computer-implemented method for generating a private key in an identity-based cryptosystem, the method comprising:

   - defining a random invertible group homomorphism between a given algebraic group (C) and a homomorphic algebraic group (C'); wherein the random invertible group homomorphism may be inverted with the knowledge of a trapdoor;
   - mapping one or more given group elements (P1... Pn) of the given algebraic group (C) by using the invertible group homomorphism to obtain one or more mapped elements (P1'... Pn') within the homomorphic algebraic group (C');
   - obtaining a new element (PK') of the homomorphic algebraic group (C') from shares (PKi') of the new element of the homomorphic algebraic group; the shares of the new element of the homomorphic algebraic group being computed by using the one or more mapped elements (P1'... Pn'), a public key (ID) and shares (MKi) of a master key (MK) by applying a secure multi party computation scheme to carry out an identity-based private key generation algorithm; each share (MKi) of the master key (MK) being stored at an entity (KGNi); and
   - mapping the new element (PK') of the homomorphic algebraic group (C') by using the trapdoor to obtain the inverse of the invertible group homomorphism to obtain a secret element (PK) of the given algebraic group (C), the secret element (PK) of the given algebraic group being a private key mathematically linked to the public key (ID).

2. The method of claim 1, wherein the step of obtaining a new element of the homomorphic algebraic group (C') from shares (PKi') of the new element (PK') of the homomorphic algebraic group comprises connecting with an intermediate entity (20), which intermediate entity (20) connects with the one or more entities (KGNi).

3. The method of any previous claim, wherein the given algebraic group (C) and the homomorphic algebraic group (C') are cyclic groups of points defined over elliptic or hyper elliptic curves and the invertible group homomorphism is an isogeny, preferably generated by random composition of low degree isogenies.

4. The method of claim 3, wherein the given curve is a supersingular elliptic curve and an efficiently computable bilinear pairing exists between points of the given curve.

5. The method of any previous claim, wherein the public key (ID) comprises a telephone number and a timestamp.

6. The method of claim 5, the method further comprising receiving a token (OBT) construed from a plurality of tokens (OBTi) generated by each entity (KGNi) storing a share (MKi) of the master key (MK).

7. The method of claim 6, wherein the step of receiving a token (OBT) construed from a plurality of tokens (OBTi) comprises connecting with an SMS gateway (30).

8. An entity (10) for generating a private key in an identity-based cryptosystem, the entity (10) comprising a processor, the processor being configured for:

   - defining a random invertible group homomorphism between a given algebraic group (C) and a homomorphic algebraic group (C'); wherein the random invertible group homomorphism may be inverted with the knowledge of a trapdoor;
   - mapping one or more given group elements (P1... Pn) of the given algebraic group (C) by using the invertible group homomorphism to obtain one or more mapped elements (P1'... Pn') within the homomorphic algebraic group (C');
   - obtaining a new element (PK') of the homomorphic algebraic group (C') from shares (PKi') of the new element of the homomorphic algebraic group; the shares of the new element of the homomorphic algebraic group being computed by using the one or more mapped elements (P1'... Pn'), a public key (ID) and shares (MKi) of a master key (MK) by applying a secure multi party computation scheme to carry out an identity-based private key generation algorithm; each share (MKi) of the master key (MK) being stored at an entity (KGNi); and
   - mapping the new element (PK') of the homomorphic algebraic group (C') by using the trapdoor to obtain the inverse of the invertible group homomorphism to obtain a secret element (PK) of the given algebraic group (C), the secret element (PK) of the given algebraic group being a private key mathematically linked to the public key (ID).

9. The entity of claim 8, comprising means for connecting with an intermediate entity (20), which intermediate entity is configured to connect with the one or more entities (KGNi) storing shares (PKi') of the new element (PK') of the homomorphic algebraic group.

10. An entity (10) for generating a private key in an identity-based cryptosystem, the entity comprising a processor configured for generating a private key (PK) in an identity-based cryptosystem according to method of any of claims 1-7.

11. The entity of any of claims 8-10, the entity being a mobile device (10).

12. The entity of claim 10, wherein the public key (ID) comprises a telephone number and a timestamp.

13. The entity of any of claims 8-12, further comprising means for receiving a token (OBT) from an SMS gateway (30), the token being construed from a plurality of tokens (OBTi) generated by each entity (KGNi) storing a share (MKi) of the master secret (MK).

**FIG. 1**

**FIG. 1B**

**FIG. 2**

**FIG. 3**

**EP 4 311 161 A1**

<table>
<tr><td colspan="5"><img Europäisches Patentamt / European Patent Office / Office européen des brevets</td></tr>
</table>

| | | |
|---|---|---|
| | **EUROPEAN SEARCH REPORT** | **Application Number**<br>EP 22 38 2685 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 528 705 A1 (MICROSOFT CORP [US]) 4 May 2005 (2005-05-04) * paragraph [0070] – paragraph [0085] * ----- | 1-13 | INV.<br>H04L9/08<br>H04L9/30<br>H04L9/32 |
| Y | BAHRAMIAN MOJTABA ET AL: "AN IDENTITY-BASED ENCRYPTION SCHEME USING ISOGENY OF ELLIPTIC CURVES", FACTA UNIVERSITATIS, SERIES: MATHEMATICS AND INFORMATICS, vol. 35, no. 5, 1 January 2020 (2020-01-01), pages 1451-1460, XP093008189, ISSN: 0352-9665, DOI: 10.22190/FUMI2005451B Retrieved from the Internet: URL:http://casopisi.junis.ni.ac.rs/index.php/FUMathInf/article/viewFile/6044/pdf> * section 4 * ----- | 1-13 | |
| Y | ANIKET KATE ET AL: "Distributed Private-Key Generators for Identity-Based Cryptography", 13 September 2010 (2010-09-13), SECURITY AND CRYPTOGRAPHY FOR NETWORKS, SPRINGER BERLIN HEIDELBERG, BERLIN, HEIDELBERG, PAGE(S) 436 – 453, XP019149420, ISBN: 978-3-642-15316-7 * section 3.4 * ----- | 1-13 | TECHNICAL FIELDS SEARCHED (IPC)<br><br>H04L |

-/--

The present search report has been drawn up for all claims

| Place of search | Date of completion of the search | Examiner |
|---|---|---|
| Munich | 21 December 2022 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 38 2685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QI FENG ET AL: "Multi-party key generation protocol for the identity-based signature scheme in the IEEE P1363 standard for public key cryptography", IET INFORMATION SECURITY, THE INSTITUTION OF ENGINEERING AND TECHNOLOGY, MICHAEL FARADAY HOUSE, SIX HILLS WAY, STEVENAGE, HERTS. SG1 2AY, UK, vol. 14, no. 6, 1 November 2020 (2020-11-01), pages 724-732, XP006106164, ISSN: 1751-8709, DOI: 10.1049/IET-IFS.2020.0096 * section 4 * | 1-13 | |
| A | YEHUDA LINDELL: "Simple Three-Round Multiparty Schnorr Signing with Full Simulatability", IACR, INTERNATIONAL ASSOCIATION FOR CRYPTOLOGIC RESEARCH , vol. 20220322:173325 22 March 2022 (2022-03-22), pages 1-29, XP061070848, Retrieved from the Internet: URL:https://eprint.iacr.org/2022/374.pdf [retrieved on 2022-03-22] * page 3, paragraph 2 * * page 7, paragraph 1 * | 1-13 | TECHNICAL FIELDS SEARCHED (IPC) |

-/--

The present search report has been drawn up for all claims

| Place of search | Date of completion of the search | Examiner |
|---|---|---|
| Munich | 21 December 2022 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 22 38 2685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SMITH M ET AL: "Identity-Based Cryptography for Securing Mobile Phone Calls", ADVANCED INFORMATION NETWORKING AND APPLICATIONS WORKSHOPS, 2009. WAINA '09. INTERNATIONAL CONFERENCE ON, IEEE, PISCATAWAY, NJ, USA, 26 May 2009 (2009-05-26), pages 365-370, XP031480791, ISBN: 978-1-4244-3999-7 * sections 3.2, 3.3 *<br>----- | 1-13 | |
| A | Soneff Steven: "Android Developers Blog: Effective phone number verification", , 13 October 2017 (2017-10-13), XP093008907, Retrieved from the Internet: URL:https://android-developers.googleblog.com/2017/10/effective-phone-number-verification.html [retrieved on 2022-12-16] * the whole document *<br>----- | 1-13 | **TECHNICAL FIELDS SEARCHED (IPC)** |

The present search report has been drawn up for all claims

| Place of search | Date of completion of the search | Examiner |
|---|---|---|
| Munich | 21 December 2022 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2685

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2022

| Patent document cited in search report | | Publication date | Patent family member(s) | | Publication date |
|---|---|---|---|---|---|
| EP 1528705 | A1 | 04-05-2005 | AT | 429098 T | 15-05-2009 |
| | | | AU | 2004218638 A1 | 19-05-2005 |
| | | | BR | PI0404122 A | 21-06-2005 |
| | | | CA | 2483486 A1 | 03-05-2005 |
| | | | CN | 1614922 A | 11-05-2005 |
| | | | CO | 5630049 A1 | 28-04-2006 |
| | | | EP | 1528705 A1 | 04-05-2005 |
| | | | HK | 1085585 A1 | 25-08-2006 |
| | | | JP | 4809598 B2 | 09-11-2011 |
| | | | JP | 2005141200 A | 02-06-2005 |
| | | | KR | 20050042441 A | 09-05-2005 |
| | | | MX | PA04010155 A | 17-05-2005 |
| | | | MY | 165770 A | 23-04-2018 |
| | | | NZ | 535698 A | 24-02-2006 |
| | | | RU | 2376651 C2 | 20-12-2009 |
| | | | SG | 111191 A1 | 30-05-2005 |
| | | | TW | I360990 B | 21-03-2012 |
| | | | US | 2005094806 A1 | 05-05-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAN BONEH ; MATTHEW K.** *Franklin designed the first such scheme,* 2001